# EUROPÄISCHE PATENTSCHRIFT

(11) **EP 2 069 094 B1**
(45) Veröffentlichungstag und Bekanntmachung des Hinweises auf die Patenterteilung: **20.01.2010**
(21) Anmeldenummer: 07788086.2
(22) Anmeldetag: 31.07.2007
(51) Int. Cl.: B23D 51/10

(54) **EINSPANNVORRICHTUNG FÜR EINE HUBSÄGEMASCHINE**
CLAMPING DEVICE FOR A JIG SAW
DISPOSITIF DE SERRAGE POUR MACHINE DE SCIAGE EN VA-ET-VIENT

(30) Priorität: 18.09.2006 DE 102006043682
(43) Veröffentlichungstag der Anmeldung: 17.06.2009
(73) Patentinhaber: Robert Bosch GmbH, 70442 Stuttgart (DE)
(72) Erfinder: KAISER, Hans, CH-3297 Leuzigen (CH); SAEGESSER, Daniel, CH-4900 Langenthal (CH); CASOTA, Marcel, CH-4460 Gelterkinden (CH)
(86) Internationale Anmeldenummer: PCT/EP2007/057891
(87) Internationale Veröffentlichungsnummer: WO 2008/034666

(56) Entgegenhaltungen:
- EP-A- 1 236 530
- EP-A- 1 468 771

## Beschreibung

Die Erfindung betrifft eine Einspannvorrichtung gemäß dem Oberbegriff des Anspruchs 1 sowie eine Hubsägemaschine gemäß dem Oberbegriff des Anspruchs 12.

Einspannvorrichtungen zum Einspannen eines Sägeblatts in einer Hubsägemaschine dienen dazu, das Sägeblatt fest mit einer motorisch angetriebenen, hin und her bewegten Hubstange der Hubsägemaschine zu verbinden, wobei eine möglichst unbewegliche Arretierung des Sägeblatts mit einer definierten Lagebeziehung zur Halterung angestrebt wird, um ein gutes und präzises Sägeergebnis zu erzielen.

### Stand der Technik

Eine Einspannvorrichtung der eingangs genannten Art ist aus der EP 1 236 530 B1 bekannt. Diese Einspannvorrichtung ermöglicht einerseits einen schnellen und einfachen Austausch des Sägeblatts und gestattet es andererseits, auch unterschiedlich dicke Sägeblätter unbeweglich und in einer definierten Lage in der schlitzförmigen Ausnehmung der Halterung festzuhalten, da die in der EP 1 236 530 B1 auch als Blattführung bezeichnete drehbare Verriegelungshülse zum einen beim Verdrehen aus der Entnahmestellung in die Verriegelungsstellung zwei seitliche Vorsprünge des Sägeblatts hintergreift, so dass sich dieses letztere nicht mehr aus der Ausnehmung der Halterung heraus bewegen kann, und zum anderen durch die Einwirkung der Kurvenfläche des Nockenelements auf das in einer Führungsöffnung der Halterung geführte Anpresselement dafür sorgt, dass dieses letzter gegen eine Breitseite des Sägeblatts angepresst wird, um das Sägeblatt mit der entgegengesetzten Breitseite gegen die benachbarte Begrenzungswand der Ausnehmung anzupressen und dadurch unabhängig von der Dicke des Sägeblatts für eine feste Fixierung zu sorgen.

Bei der bekannten Einspannvorrichtung ist das Nockenelement der Verriegelungshülse an beiden Stirnenden der Kurvenfläche mit Anschlagbereichen versehen, die jeweils von einem hakenförmig nach innen umgebogenen Endabschnitt des Nockenelements gebildet werden, das wiederum radial einwärts von der zylindrischen Torsionsfeder in einem ringförmigen Zwischenraum zwischen der zylindrischen äußeren Umfangsfläche eines Teils der Halterung und der Innenseite einer zylindrischen Außenwand der Verriegelungshülse angeordnet ist. Die beiden nach innen umgebogenen und als Anschlagbereiche dienenden Endabschnitte des Nockenelements schlagen von entgegengesetzten Seiten her gegen einen nach außen weisenden verdickten Kopfteil des Anpresselements an, wenn sich die Verriegelungshülse in der Entnahmestellung bzw. einer Grund- oder Ausgangsstellung befindet, in der kein Sägeblatt in der Halterung aufgenommen ist und von einem Benutzter keine Kraft auf die Verriegelungshülse aufgebracht wird. Auf diese Weise kann eine Drehung der Verriegelungshülse über diese beiden Endstellungen hinaus verhindert werden.

Diese Anordnung hat jedoch zwei Nachteile: Wenn ein Benutzer die Verriegelungshülse mit Hilfe eines Schwenkhebel in die Entnahmestellung dreht und dabei kräftig auf den Schwenkhebel drückt, schlägt der eine umgebogene Endabschnitt des Nockenelements der Verriegelungshülse infolge der Hebelwirkung mit großer Kraft gegen den Kopfteil des Anpresselements an, was gegebenenfalls ein Verbiegen des Endabschnitts oder ein Verkanten des Anpresselements in der Führungsöffnung der Halterung zur Folge haben kann. Ein Verbiegen des Endabschnitts wird noch dadurch begünstigt, dass in der Entnahmestellung der Abstand zwischen der Kurvenfläche und dem Kopfteil des Anpresselements am größten ist, so dass der umgebogene Endabschnitt in radialer Richtung relativ weit nach innen über einen benachbarten Abschnitt des Nockenelements überstehen muss, damit er gegen den Kopfteil anschlägt. Der relativ große Überstand des umgebogenen Endabschnitts kann außerdem dazu führen, dass sich dieser im Ringspalt zwischen der äußeren Umfangsfläche der Halterung und dem inneren Umfang der zylindrischen Torsionsfeder verklemmt.

Ausgehend hiervon liegt der Erfindung die Aufgabe zugrunde, die bekannte Einspannvorrichtung dahingehend zu verbessern, dass sich ein Überdrehen der Verriegelungshülse über die Entnahmestellung hinaus ohne die Gefahr eines Verkantens des Anpresselements bzw. ohne die Gefahr einer Beschädigung des mit der Kurvenfläche versehenen Nockenelements verhindern lässt.

### Offenbarung der Erfindung

Diese Aufgabe wird erfindungsgemäß dadurch gelöst, dass der Anschlag mit einem Teil der Torsionsfeder zusammenwirkt, um ein Verdrehen der Verriegelungshülse über die Entnahmestellung hinaus zu verhindern.

Vorzugsweise grenzt der mit dem Anschlag zusammenwirkende Teil der Torsionsfeder an ein in eine Aussparung der Halterung eingesetztes Stirnende der Torsionsfeder an, wobei der mit dem Anschlag zusammenwirkende Teil radial nach außen über die Halterung übersteht und den die Halterung umgebenden Ringspalt durchsetzt.

Dies hat den Vorteil, dass derselbe Endabschnitt des mit der Kurvenfläche versehenen Nockenelements verwendet werden kann, um ein Verdrehen der Verriegelungshülse in einer Richtung über die Entnahmestellung hinaus zu verhindern und um ein Verdrehen der Verriegelungshülse in der entgegengesetzten Richtung über die Grund- oder Ausgangsstellung hinaus zu verhindern, in welche die Verriegelungshülse von der Torsionsfeder gedreht wird, wenn sich kein Sägeblatt in der Ausnehmung der Halterung befindet. In der Grund- oder Ausgangsstellung schlägt der Endabschnitt zweckmäßig wie bei der aus der EP 1 236 530 B1 bekannten Einspannvorrichtung gegen eine Seite eines verdickten Kopfteils des Anpresselements an, um ein Verdrehen der Verriegelungshülse über die Grund- oder Ausgangsstellung hinaus zu verhindern. Mit anderen Worten braucht dann das mit der Kurvenfläche versehene Nockenelement nur an oder in der Nähe eines Stirnendes mit den Anschlagbereichen versehen werden, die für eine Begrenzung des Drehwinkels in beiden Drehrichtungen sorgen.

Außerdem braucht das Stirnende des Nockenelements zur Bildung des mit der Torsionsfeder in Anschlag tretenden Anschlagbereichs nicht umgebogen werden, wodurch seine Verformungsfestigkeit verbessert werden kann. Eine besonders große Festigkeit wird erreicht, wenn das Stirnende des Nockenelements etwas über das in der Grund- oder Ausgangsstellung mit dem Kopfteil des Anpresselements in Anschlag tretenden Anschlagbereich hinaus verlängert und gegebenenfalls etwas verdickt ausgebildet wird, wobei dieses Stirnende dann den mit der Torsionsfeder in Anschlag tretenden Anschlagbereich bildet. Da das Stirnende im Wesentlichen in Bewegungsrichtung des Nockenelements ausgerichtet ist, wenn es gegen die Torsionsfeder anschlägt, weist das Nockenelement in Anschlagrichtung eine große Steifigkeit auf.

Die Winkelposition, in der das Stirnende des Nockenelements mit der Torsionsfeder in Anschlag tritt, kann entweder durch eine Veränderung der Winkelausrichtung der zur Aufnahme des Stirnendes der Torsionsfeder dienenden Öffnung der Halterung und/oder durch eine entsprechende Verlängerung des Stirnendes des Nockenelements über den in der Grund- oder Ausgangsstellung als Anschlagbereich dienenden Abschnitt hinaus erreicht werden.

Alternativ wäre es jedoch auch denkbar, in der Grund- oder Ausgangsstellung das entgegengesetzte Stirnende des Nockenelements als Anschlag zur Begrenzung der Drehbewegung der Verriegelungshülse zu verwenden, indem das Nockenelement an diesem Ende so weit verlängert wird, so dass es in der Grund- oder Ausgangsstellung von der entgegengesetzten Seite her gegen den in der Entnahmestellung als Anschlag für das Nockenelement dienenden Teil der Torsionsfeder anschlägt.

### Kurze Beschreibung der Zeichnungen

Im folgenden wird die Erfindung anhand eines in der Zeichnung dargestellten Ausführungsbeispiels näher erläutert. Es zeigen:
Fig. 1: eine perspektivische Ansicht einer Stichsäge mit einem eingespanntem Sägeblatt;
Fig. 2: eine Längsschnittansicht einer Hubstange und einer Einspannvorrichtung der Stichsäge mit Sägeblatt;
Fig. 3: eine vergrößerte Schnittansicht der Einspannvorrichtung entlang der Linie III-III der Fig. 2, jedoch ohne ein eingespanntes Sägeblatt und in einer Grund- oder Ausgangsstellung einer Verriegelungshülse;
Fig. 4: eine vergrößerte Querschnittsansicht der Einspannvorrichtung entlang der Linie IV-IV der Fig. 3;
Fig. 5: eine vergrößerte Schnittansicht der Einspannvorrichtung ohne ein eingespanntes Sägeblatt entsprechend Fig. 3, jedoch in einer Entnahmestellung der Verriegelungshülse.
Fig. 6: eine vergrößerte Querschnittsansicht der Einspannvorrichtung entlang der Linie VI-VI der Fig. 5;
Fig. 7: eine vergrößerte Schnittansicht der Einspannvorrichtung entsprechend Fig. 3 und 5, jedoch mit einem eingespannten Sägeblatt und in einer Verriegelungsstellung der Verriegelungshülse;
Fig. 8: eine vergrößerte Querschnittsansicht der Einspannvorrichtung entlang der Linie VIII-VIII der Fig. 7.

### Ausführungsform der Erfindung

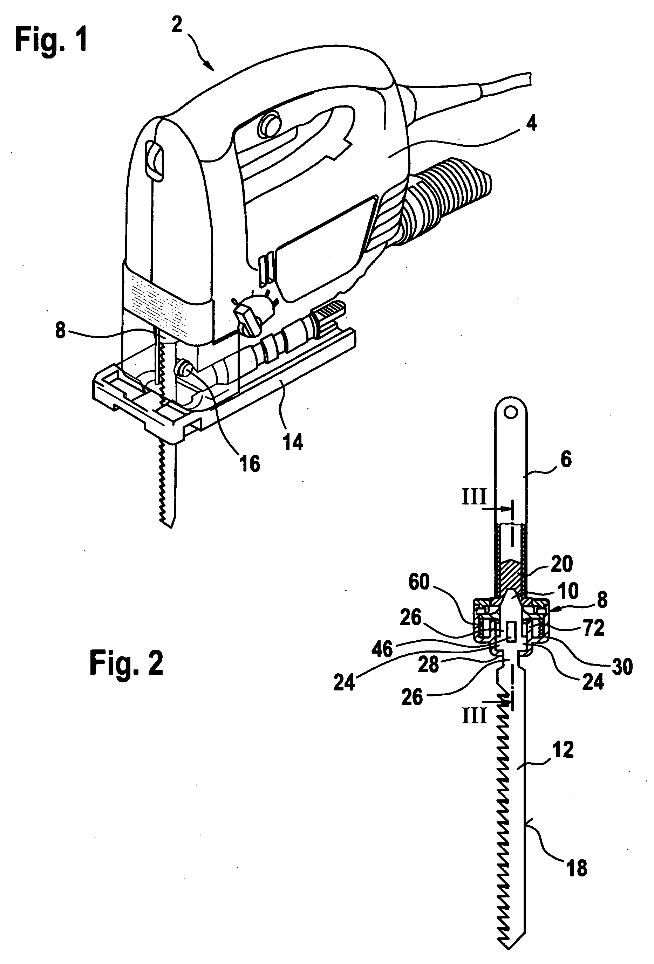

Die in Fig. 1 der Zeichnung dargestellte handgeführte Stichsäge 2 umfasst in an sich bekannter Weise ein Gehäuse 4, einen innerhalb des Gehäuses 4 angeordneten Elektromotor mit einem Getriebe (nicht dargestellt), eine vom Elektromotor über das Getriebe linear angetriebene, hin und her bzw. auf und ab bewegliche Hubstange 6, eine am freien Ende der Hubstange 6 angeordnete Einspannvorrichtung 8 zum Einspannen eines Kopfendes 10 eines Sägeblatts 12, sowie eine zwischen der Einspannvorrichtung 8 und einer verstellbaren Fußplatte 14 der Stichsäge 2 angeordnete Stützrolleneinheit 16 zum Abstützen eines Sägeblattrückens 18 des Sägeblatts 12.

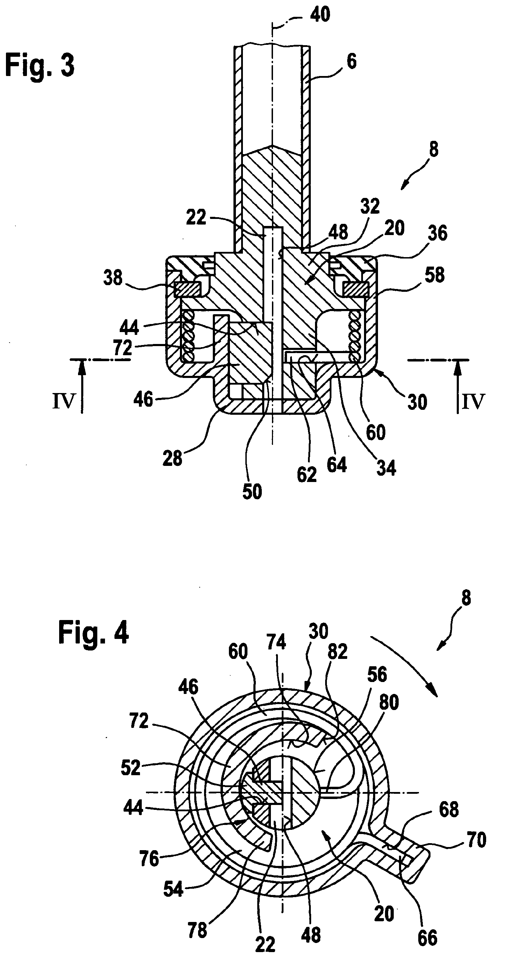

Wie am besten in den Figuren 3 bis 8 dargestellt, weist die Einspannvorrichtung 8 eine starr mit dem unteren freien Ende der Hubstange 8 verbundene Halterung 20 auf. Die Halterung 20 ist mit einer im Querschnitt rechteckigen, nach unten zu offenen schlitzförmigen Ausnehmung 22 versehen, in die sich das Kopfende 10 des Sägeblatts 12 von unten her einführen und dann in der Halterung 20 verriegeln lässt.

Wie in Fig. 2 dargestellt, ist zu diesem Zweck das Kopfende 10 des Sägeblatts 12 mit zwei entgegengesetzten seitlichen Vorsprüngen 24 und unterhalb der Vorsprünge 24 mit einem verengten Halsabschnitt 26 versehen, so dass die Vorsprünge 24 nach dem Einführen des Kopfendes 10 des Sägeblatts 12 in die Ausnehmung 22 der Halterung 20 vom unteren Stirnende 28 einer die Halterung 20 umgebenden Verriegelungshülse 30 hintergriffen werden können, um das Kopfende 10 des Sägeblatts 12 in axialer Richtung unverschiebbar in der Ausnehmung 22 festzuhalten.

Die Halterung 20 weist weiter einen oberen Teil 32 mit größerem Durchmesser und einen unteren Teil 34 mit kleinerem Durchmesser auf und wird abgesehen von einer oberen Staubschutzkappe 36 zum überwiegenden Teil von der stufenförmig abgesetzten hohlzylindrischen Verriegelungshülse 30 umschlossen, die mittels eines Sprengrings 38 um eine Längsachse 40 der Hubstange 6 zwischen zwei definierten Endstellungen drehbar an der Halterung 20 befestigt ist.

Die erste, in Fig. 3 und 4 dargestellte und als Grund- oder Ausgangsstellung bezeichnete Endstellung ist die Stellung, in der sich die Verriegelungshülse 30 befindet, wenn kein Sägeblatt 12 in die Ausnehmung 22 eingesetzt ist und keine Drehkraft von einem Benutzer auf die Verriegelungshülse 30 aufgebracht wird.

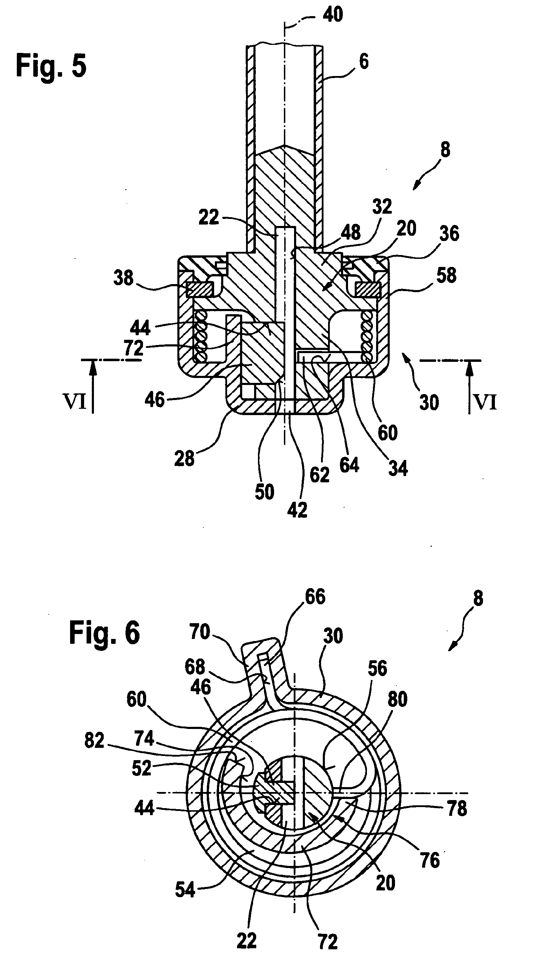

Die zweite, in Fig. 5 und 6 dargestellte Endstellung ist die Entnahmestellung, in der eine rechteckige Schlitzöffnung 42 im unteren Stirnende 28 der Verriegelungshülse 30 mit der im Querschnitt rechteckigen Ausnehmung 22 in der Halterung 20 fluchtet, so dass sich das Kopfende 10 des Sägeblatts 12 einschließlich der Vorsprünge 24 von unten durch die Schlitzöffnung 42 in die Ausnehmung 22 einführen lässt.

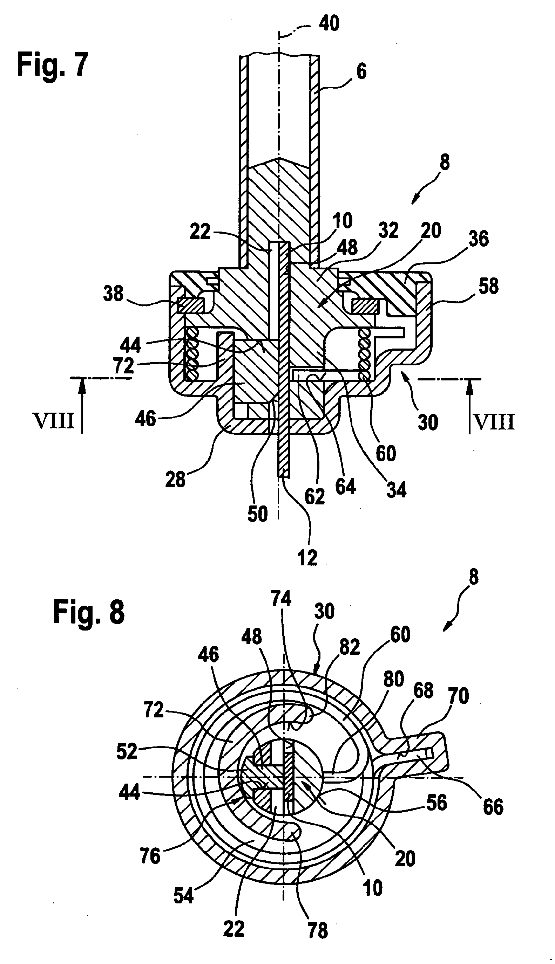

Zwischen der Grund- oder Ausgangsstellung und der Entnahmestellung liegt die in Fig. 7 und 8 dargestellte Verriegelungsstellung, in der gegenüberliegende Ränder der Schlitzöffnung 42 im unteren Stirnende 28 der Verriegelungshülse 30 die beiden Vorsprünge 24 des Sägeblatts 12 hintergreifen, wie am besten in Fig. 2 dargestellt, und dadurch eine axiale Bewegung des Sägeblatts 12 aus der Ausnehmung 22 verhindern.

Im unteren Teil der Halterung 20 befindet sich eine quer zur Längsachse 40 der Hubstange 6 ausgerichtete Führungsöffnung 44, in die ein Anpressbolzen 46 quer zur Längsachse 40 verschiebbar eingesetzt ist. Der Anpressbolzen 46 dient dazu, das in die Ausnehmung 22 eingeführte Kopfende 10 des Sägeblatts 12 in der Verriegelungsstellung gegen eine dem Anpressbolzen 46 gegenüberliegende Begrenzungswand 48 der Ausnehmung 22 anzupressen, um das Kopfende 10 des Sägeblatts 12 unabhängig von seiner Dicke in einer definierten Lage gegen die Begrenzungswand 48 anliegend festzuhalten und dadurch für eine gleichbleibende und präzise Positionierung des Sägeblatts 12 zu sorgen. Dazu muss der Anpressbolzen 46 umso weiter in die Ausnehmung 22 hinein verschoben werden, je dünner das Sägeblatt 12 ist.

Der im Querschnitt rechteckige Anpressbolzen 46 weist an der Unterseite seines in die Ausnehmung 22 ragenden inneren Endes eine Abschrägung 50 auf, so dass er beim Einführen des Kopfendes 10 des Sägeblatts 12 in die Ausnehmung 22 nach außen verschoben wird, bis das Kopfende 10 des Sägeblatts 12 zwischen dem freien Ende des Anpressbolzens 46 und der Begrenzungswand 48 hindurch in die Ausnehmung 22 eintreten kann. Weiter weist der Anpressbolzen 46 einen erweiterten Kopfteil 52 auf, der in einen ringförmigen Zwischenraum 54 zwischen einer zylindrischen Umfangsfläche 56 des unteren Teils 34 der Halterung 20 und der Innenseite einer Außenwand 58 eines erweiterten Oberteils der Verriegelungshülse 30 ragt.

In diesem Zwischenraum 54 befindet sich eine schraubenförmig gewickelte Torsionsfeder 60, deren eines Stirnende 62 radial nach innen umgebogen und gegenüber vom freien Ende des Anpressbolzens 46 in eine radiale Aufnahmeöffnung 64 im unteren Teil 34 der Halterung 20 eingeführt ist und deren anderes Stirnende 66 radial nach außen umgebogen ist und in eine Aufnahmeöffnung 68 eines radial nach außen über die Außenseite der Verriegelungshülse 30 überstehenden hohlen Vorsprungs 70 eingeführt ist. Die Torsionsfeder 60 hat die Aufgabe, die Verriegelungshülse 30 in die Grund- oder Ausgangsstellung bzw. in die Verriegelungsstellung zu drehen, wenn das Sägeblatt 12 in der Entnahmestellung aus der Ausnehmung 22 der Halterung 20 entnommen bzw. in die Ausnehmung 22 der Halterung 20 eingesetzt worden ist und ein zum Verdrehen der Verriegelungshülse 30 in die Entnahmestellung dienender, einseitig auf den Vorsprung 70 einwirkender Entriegelungshebel (nicht dargestellt) vom Benutzer losgelassen worden ist.

Der Zwischenraum 54 dient weiter zur Aufnahme eines einstückig mit der Verriegelungshülse 30 verbundenen Nockenelements 72, das zwischen der Torsionsfeder 60 und der Umfangsfläche 56 des unteren Teils 34 der Halterung 20 von unten her in den Zwischenraum 54 ragt, wie am besten in den Figuren 3, 5 und 6 dargestellt. Das Nockenelement 72 weist etwa die Form einer halben Spiralwindung auf und ist an seiner der Halterung 20 zugewandten Innenseite mit einer Kurvenfläche 74 versehen, deren Abstand von der Umfangsfläche 56 des unteren Teils 34 der Halterung 20 entgegen dem Uhrzeigersinn abnimmt. Dadurch wird der Anpressbolzen 46 von der auf seinen Kopfteil 52 einwirkenden Kurvenfläche 74 des Nockenelements 72 in die Ausnehmung 22 hinein zugestellt und mit seinem freien Ende gegen die benachbarte Breitseite des in die Ausnehmung 22 eingeführten Kopfendes 10 des Sägeblatts 12 und dieses wiederum mit seiner entgegengesetzten Breitseite gegen die benachbarte Begrenzungswand 48 der Ausnehmung 22 angepresst, wenn die Verriegelungshülse 30 von der Torsionsfeder 60 im Uhrzeigersinn, d.h. in Richtung des Pfeils in Fig. 4, in die Verriegelungsstellung gedreht wird.

Um zu verhindern, dass die Verriegelungshülse 30 von der Torsionsfeder 60 über die in Fig. 3 und 4 dargestellte Grund- oder Ausgangsstellung hinaus gedreht wird, wenn kein Sägeblatt 12 in die Ausnehmung 22 eingeführt worden ist, weist das Nockenelement 72 in der Nähe seines einen Stirnendes einen Anschlagbereich 76 auf, der in der Grund- oder Ausgangsstellung gegen eine Seite des erweiterten Kopfteils 52 des Anpressbolzens 46 anschlägt und eine weitere Drehung des Nockenelements 72 und damit der Verriegelungshülse 30 über die Grund- oder Ausgangsstellung hinaus verhindert.

Um zu verhindern, dass die Verriegelungshülse 30 beim Austausch des Sägeblatts 12 vom Benutzer entgegen dem Uhrzeigersinn über die in Fig. 5 und 6 dargestellte Entnahmestellung hinaus gedreht wird, weist das Nockenelement 72 jenseits des Anschlagbereichs 76 ein verlängertes Stirnende 78 auf, dessen Länge so bemessen ist, dass es in der Entnahmestellung gegen einen Teil 80 der Torsionsfeder 60 anschlägt. Dieser Teil 80 der Torsionsfeder 60 grenzt an das in die Aufnahmeöffnung 64 eingesetzte Stirnende 42 der Torsionsfeder 60 an und steht radial nach außen über die Halterung 22 über, wobei er sich quer durch den Zwischenraum 54 erstreckt.

Durch Veränderung der Länge des über den Anschlagbereich 76 überstehenden Stirnendes 78 des Nockenelements 72 ist es möglich, einen gewünschten Drehwinkel der Verriegelungshülse 30 zwischen der Entnahmestellung und der Grund- oder Ausgangsstellung einzustellen.

Zur Veränderung dieses Drehwinkels wäre es aber auch möglich, die in der Halterung 22 ausgesparte Aufnahmeöffnung 62 für das Stirnende 42 der Torsionsfeder 60 statt genau gegenüber von der Führungsöffnung 44 des Anpressbolzens 46 in Bezug zur Achse 40 unter einem anderen Winkel zu dieser Öffnung 44 anzuordnen.

Weiter ist es möglich, auf den Anschlagbereich 76 zu verzichten und das zum Stirnende 78 entgegengesetzte Stirnende 82 des Nockenelements 72 so weit zu verlängern, dass es in der Grund- oder Ausgangsstellung gegen die entgegengesetzte Seite des Teils 80 der Torsionsfeder 60 anschlägt (nicht dargestellt).

## Patentansprüche

1. Einspannvorrichtung zum Verbinden eines Sägeblatts (12) mit einer Hubstange (6) einer Hubsägemaschine, insbesondere einer handgeführte Stichsäge, umfassend eine mit der Hubstange (6) verbundene Halterung (20), die eine Ausnehmung (22) zur Aufnahme eines Kopfendes (10) des Sägeblatts (12) aufweist, eine Verriegelungshülse (30), die in Bezug zur Halterung entgegen der Kraft einer Torsionsfeder (60) um die Achse drehbar ist, um das Kopfende (10) des Sägeblatts (12) in einer Verriegelungsstellung in der Ausnehmung (22) zu verriegeln und in einer Entnahmestellung eine Entnahme des Sägeblatts (12) zu erlauben, **dadurch gekennzeichnet, dass** ein Anschlag (78) mit einem Teil (80) der Torsionsfeder (60) zusammenwirkt, um die Bewegung der Verriegelungshülse (30) über die Entnahmestellung hinaus zu verhindern.

2. Einspannvorrichtung nach Anspruch 1, **dadurch gekennzeichnet, dass** der mit dem Anschlag (78) zusammenwirkende Teil (80) der Torsionsfeder (60) im Wesentlichen radial zur Achse (40) ausgerichtet ist.

3. Einspannvorrichtung nach Anspruch 1 oder 2, **dadurch gekennzeichnet, dass** der mit dem Anschlag (78) zusammenwirkende Teil (80) der Torsionsfeder (60) nach außen über einen Teil (34) der Halterung (22) übersteht.

4. Einspannvorrichtung nach einem der vorangehenden Ansprüche, **dadurch gekennzeichnet, dass** der mit dem Anschlag (78) zusammenwirkende Teil (80) der Torsionsfeder (60) an ein in eine Aussparung (62) der Halterung (22) eingesetztes Stirnende (62) der Torsionsfeder (60) angrenzt.

5. Einspannvorrichtung nach einem der vorangehenden Ansprüche, **dadurch gekennzeichnet, dass** die Hubstange (6) entlang einer Achse (40) hin und her beweglich ist.

6. Einspannvorrichtung nach einem der vorangehenden Ansprüche, **gekennzeichnet durch** ein Anpresselement (46) zum Anpressen des Sägeblatts (12) gegen eine seitliche Begrenzungswand (48) der Ausnehmung (22).

7. Einspannvorrichtung nach Anspruch 6, **dadurch gekennzeichnet, dass** das Anpresselement (46) in Bezug zur Halterung (20) quer zur Achse (40) beweglich ist

8. Einspannvorrichtung nach Anspruch 6 oder 7, **dadurch gekennzeichnet, dass** die Verriegelungshülse (30) mit einer Kurvenfläche (74) eines Nockenelements (72) auf das Anpresselement (46) einwirkt, um das Sägeblatt (12) in der Verriegelungsstellung gegen die Begrenzungswand (48) der Ausnehmung (22) anzupressen.

9. Einspannvorrichtung nach Anspruch 8, **dadurch gekennzeichnet, dass** das Nockenelement (72) mit einem Anschlag (78) versehen ist, der eine Bewegung der Verriegelungshülse (30) über die Entnahmestellung hinaus verhindert,

10. Einspannvorrichtung nach Anspruch 9, **dadurch gekennzeichnet, dass** der Anschlag (78) von einem Stirnende (78) des Nockenelements (72) gebildet wird, das im Wesentlichen in Bewegungsrichtung des Nockenelements (72) weist.

11. Einspannvorrichtung nach einem der Ansprüche 8 bis 10, **dadurch gekennzeichnet, dass** das Nockenelement (72) mit einem Anschlagbereich (76) versehen ist, der eine Bewegung der Verriegelungshülse (30) über eine Grund-oder Ausgangsstellung hinaus verhindert, und dass der Anschlag (78) und der Anschlagbereich (76) nahe beieinander auf dem Nockenelement (72) angeordnet sind.

12. Hubsägemaschine, insbesondere handgeführte Stichsäge, **gekennzeichnet durch** eine Einspannvorrichtung nach einem der vorangehenden Ansprüche.

## Claims

1. Clamping device for connecting a saw blade (12) to a reciprocating rod (6) of a reciprocating sawing machine, in particular a portable jigsaw, comprising a retainer (20), which is connected to the reciprocating rod (6) and has a recess (22) for accommodating a head end (10) of the saw blade (12), and a locking sleeve (30) which can be rotated about an axis with respect to the retainer against the force of a torsion spring (60) in order to lock the head end (10) of the saw blade (12) in a locking position in the recess (22) and enable the saw blade (12) to be removed in a removal position, **characterized in that** a stop (78) interacts with a part (80) of the torsion spring (60) in order to prevent the movement of the locking sleeve (30) beyond the removal position.

2. Clamping device according to Claim 1,
**characterized in that** the part (80) of the torsion spring (60) that interacts with the stop (78) is oriented substantially radially to the axis (40).

3. Clamping device according to Claim 1 or 2,
**characterized in that** the part (80) of the torsion spring (60) that interacts with the stop (78) projects outwards beyond a part (34) of the retainer (22).

4. Clamping device according to one of the preceding claims, **characterized in that** the part (80) of the torsion spring (60) that interacts with the stop (78) adjoins a front end (62), inserted into an aperture (62) in the retainer (22), of the torsion spring (60).

5. Clamping device according to one of the preceding claims, **characterized in that** the reciprocating rod (6) is movable in a reciprocating manner along an axis (40).

6. Clamping device according to one of the preceding claims, **characterized by** a pressure element (46) for pressing the saw blade (12) against a lateral boundary wall (48) of the recess (22).

7. Clamping device according to Claim 6, **characterized in that** the pressure element (46) is movable transversely to the axis (40) with respect to the retainer (20).

8. Clamping device according to Claim 6 or 7, **characterized in that** the locking sleeve (30) acts on the pressure element (46) by means of a curved surface (74) of a cam element (72) in order to press the saw blade (12) in the locking position against the boundary wall (48) of the recess (22).

9. Clamping device according to Claim 8, **characterized in that** the cam element (72) is provided with a stop (78) which prevents a movement of the locking sleeve (30) beyond the removal position.

10. Clamping device according to Claim 9, **characterized in that** the stop (78) is formed by a front end (78) of the cam element (72), said front end (78) pointing substantially in the direction of movement of the cam element (72).

11. Clamping device according to one of Claims 8 to 10, **characterized in that** the cam element (72) is provided with a stop region (76) which prevents a movement of the locking sleeve (30) beyond a basic or initial position, and **in that** the stop (78) and the stop region (76) are arranged close together on the cam element (72).

12. Reciprocating sawing machine, in particular a portable jigsaw, **characterized by** a clamping device according to one of the preceding claims.

## Revendications

1. Dispositif de serrage pour connecter une lame de scie (12) à une tige à mouvement alternatif (6) d'une machine de sciage à mouvement alternatif, notamment d'une scie sauteuse manuelle, comprenant une fixation (20) connectée à la tige à mouvement alternatif (6), qui présente un évidement (22) pour recevoir une extrémité de tête (10) de la lame de scie (12), une douille de verrouillage (30) qui peut tourner autour de l'axe par rapport à la fixation, à l'encontre de la force d'un ressort de torsion (60), afin de verrouiller l'extrémité de tête (10) de la lame de scie (12) dans une position de verrouillage dans l'évidement (22), et de permettre de retirer la lame de scie (12) dans une position de retrait, **caractérisé en ce qu'**une butée (78) coopère avec une partie (80) du ressort de torsion (60) pour empêcher le mouvement de la douille de verrouillage (30) au-delà de la position de retrait.

2. Dispositif de serrage selon la revendication 1, **caractérisé en ce que** la partie (80) du ressort de torsion (60) coopérant avec la butée (78) est orientée essentiellement radialement par rapport à l'axe (40).

3. Dispositif de serrage selon la revendication 1 ou 2, **caractérisé en ce que** la partie (80) du ressort de torsion (60) coopérant avec la butée (78) dépasse vers l'extérieur au-delà d'une partie (34) de la fixation (22).

4. Dispositif de serrage selon l'une quelconque des revendications précédentes, **caractérisé en ce que** la partie (80) du ressort de torsion (60) coopérant avec la butée (78) est adjacente à une extrémité frontale (62) du ressort de torsion (60) insérée dans un évidement (62) de la fixation (22).

5. Dispositif de serrage selon l'une quelconque des revendications précédentes, **caractérisé en ce que** la tige à mouvement alternatif (6) est déplaçable en va et vient le long d'un axe (40).

6. Dispositif de serrage selon l'une quelconque des revendications précédentes, **caractérisé par** un élément de pressage (46) pour presser la lame de scie (12) contre une paroi de limitation latérale (48) de l'évidement (22).

7. Dispositif de serrage selon la revendication 6, **caractérisé en ce que** l'élément de pressage (46) est déplaçable par rapport à la fixation (20) transversalement à l'axe (40).

8. Dispositif de serrage selon la revendication 6 ou 7, **caractérisé en ce que** la douille de verrouillage (30) agit sur l'élément de pressage (46) avec une face de came (74) d'un élément de came (72), afin de presser la lame de scie (12) dans la position de verrouillage contre la paroi de limitation (48) de l'évidement (22).

9. Dispositif de serrage selon la revendication 8, **caractérisé en ce que** l'élément de came (72) est pourvu d'une butée (78) qui empêche un déplacement de la douille de verrouillage (30) au-delà de la position de retrait.

10. Dispositif de serrage selon la revendication 9, **caractérisé en ce que** la butée (78) est formée par une extrémité frontale (78) de l'élément de came (72), qui est essentiellement tournée dans la direction du déplacement de l'élément de came (72).

11. Dispositif de serrage selon l'une quelconque des revendications 8 à 10, **caractérisé en ce que** l'élément de came (72) est pourvu d'une région de butée (76) qui empêche un déplacement de la douille de verrouillage (30) au-delà d'une position de base ou de départ, et **en ce que** la butée (78) et la région de butée (76) sont disposées à proximité l'une de l'autre sur l'élément de came (72).

12. Machine de sciage à mouvement alternatif, en particulier scie sauteuse manuelle, **caractérisée par** un dispositif de serrage selon l'une quelconque des revendications précédentes.
